(19) Europäisches Patentamt / European Patent Office / Office européen des brevets

(11) **EP 3 072 087 B1**

(12) **FASCICULE DE BREVET EUROPEEN**

(45) Date de publication et mention de la délivrance du brevet:
**19.02.2020 Bulletin 2020/08**

(21) Numéro de dépôt: **14809485.7**

(22) Date de dépôt: **18.11.2014**

(51) Int Cl.:
***G06K 19/077*** *(2006.01)*

(86) Numéro de dépôt international:
**PCT/FR2014/052947**

(87) Numéro de publication internationale:
**WO 2015/075369 (28.05.2015 Gazette 2015/21)**

(54) **CARTE À MICROCIRCUIT CONTENANT DE MULTIPLES CARTES PRÉDÉCOUPÉES AYANT UNE MÊME PLAGE DE CONTACTS**

MIKROSCHALTKARTE MIT MEHREREN VORAUSGESCHNITTENEN KARTEN MIT EIN- UND DERSELBEN KONTAKTSPANNWEITE

MICROCIRCUIT CARD CONTAINING MULTIPLE PRE-CUTOUT CARDS HAVING ONE AND THE SAME SPAN OF CONTACTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.11.2013 FR 1361373**

(43) Date de publication de la demande:
**28.09.2016 Bulletin 2016/39**

(73) Titulaire: **IDEMIA France**
**92700 Colombes (FR)**

(72) Inventeurs:
- **BOSQUET, Olivier**
  **92700 Colombes (FR)**
- **SRON, Mouy-Kuong**
  **92700 Colombes (FR)**

(74) Mandataire: **Santarelli**
**49, avenue des Champs-Elysées**
**75008 Paris (FR)**

(56) Documents cités:
EP-A1- 2 608 116        DE-A1-102011 107 203
DE-A1-102012 001 776     FR-A1- 2 982 690
FR-A1- 2 985 061

## Description

L'invention concerne une carte à microcircuit contenant de multiples cartes prédécoupées contenant une même plage globale de contacts.

On connait divers formats de cartes à microcircuit ayant des plages de contact, dont certains sont définis dans les normes ETSI 102 221 (dont la dernière version, V11.0.0 date de 2012-06) et ISO7816. On connaît ainsi quatre formats connus sous les désignations 1FF à 4FF :

- Le format 1FF, également appelé ID-1, correspond au format des cartes de crédit et a un corps délimitée par une forme rectangulaire de 85,6 mm x 54 mm x 0,76 mm,
- Le format 2FF, également appelé ID-000, dont le corps de carte est délimité par une forme rectangulaire de 15 mm X 25 mm X 0,76 mm, avec un détrompeur de 3 X 3 mm dans un coin du corps de carte, et
- Le format 3FF, également appelé Mini UICC, dont le corps de carte est délimité par une forme rectangulaire de 15 mm X 12 mm X 0,76 mm, avec un détrompeur de 2,5 X 2,5 mm dans un coin du corps de carte, et
- Le format 4FF, défini récemment, dont le corps de carte est délimité par une forme rectangulaire de 12,3 mm x 8,8 mm x 0,67 mm avec un détrompeur de 1,65 mm x 1,65 mm.

Ces cartes ont en commun de comporter un microcircuit et des plages ou surfaces individuelles de contact connectées au microcircuit ; les surfaces de contact sont habituellement disposées de manière à former conjointement une plage globale de contacts dont le contour est habituellement de forme géométrique simple, souvent globalement rectangulaire ; de manière classique, le microcircuit et la plage globale de contacts sont portés par une plaquette, sur les faces respectives de celle-ci, avec laquelle ils forment un module monté dans une cavité dans le corps que comporte chaque carte.

Ces plages de contact sont destinées à permettre une communication de la carte considérée avec un dispositif de communication par contact. Dans le cas des cartes 1FF, 2FF ou 3FF, cette plaque de contact est généralement munie de huit surfaces de contacts communément désignées par les appellations C1 à C8 habituellement réparties sur deux colonnes sensiblement parallèles. Une première colonne peut comprendre des contacts appelés C1 à C4 et une deuxième colonne peut comprendre les contacts appelés C5 à C8. La norme ISO7816-2 définit notamment les zones minimales de ces surfaces de contact, à savoir 2 millimètres de large et 1,7 millimètre de haut. Cette norme définit également les positions relatives de ces zones de contacts ainsi que leurs dimensionnements.

Ainsi, les surfaces de contacts correspondent à des surfaces effectives alors que les zones de contacts correspondent aux emplacements théoriques minimum décrits par la norme ISO7816.

A titre d'information, les surfaces de contacts C1 et C5 servent pour l'alimentation ou C1, correspond à Vcc, encore appelé « l'alimentation positive » et C5 correspond à GND, encore appelé « la terre ».

La surface de contact C2, encore appelé RST, sert à la remise à zéro de la puce.

La surface de contact C3, encore appelé CLK, sert à l'horloge de la puce.

La surface de contact C7, encore appelé I/O, sert aux entrées et sorties des informations de la puce.

Les surfaces de contacts C4, C6 et C8 sont destinées à des contacts dits « réservés », qui n'ont pas de fonctions particulières. Aujourd'hui, ces contacts C4 et C8 peuvent être utilisés pour les ports USB et le contact C6 pour le protocole de communication SWP (« Single Wire Protocole »).

Pour la suite de la description, on peut considérer que les contacts ayant un indice entre 1 et 8 ont les mêmes fonctions que ceux décrits ci-dessus.

En ce qui concerne le format le plus récent, 4FF, qui est aussi le plus petit, il est prévu que les surfaces de contact C4 et C8 soient situées entre les colonnes regroupant les contacts C1 à C3 (à gauche) et les contacts C5 à C7 (à droite).

Pour la suite de la description on considérera qu'une carte à microcircuit, sensiblement rectangulaire dont la face avant (face à l'observateur) supporte la plaque de contact, présente le détrompeur en bas à droite de cette carte. Par extension, la face opposée à la face avant est la face arrière.

A propos de la carte de format 4FF, on peut ainsi dire que les contacts C1 et C5 sont situés à proximité du bord supérieur (ou en haut) de la carte ou de la plaque de contact, que les contacts C3 et C7 sont situés à proximité du bord inférieur (ou en bas), que les contacts C1 à C3 sont situés à proximité du bord gauche et que les contacts C5 à C7 sont situés à proximité du bord droit, que le contact C4 est situé à proximité du bord supérieur entre les deux colonnes et que le contact C8 est situé à proximité du bord inférieur entre les deux colonnes.

Il est à noter que, bien que les normes précisent les emplacements et dimensions des zones de contact C4 et C8, une carte peut ne pas comporter de surface de contact C4 ou C8 spécifique, si aucune fonction n'est utilisée en relation avec ces contacts. En particulier il existe des cartes de format 4FF, voire d'un format supérieur, ne comportant que six surfaces de contact distinctes, respectivement destinées à être en contact avec des contacts C1 à C3, C5 à C7 d'un dispositif extérieur de communication en lecture ou en écriture.

Les tolérances de l'ensemble des cartes décrites ci-dessus sont de l'ordre de 0.1mm.

La variété des usages possibles pour une carte à microcircuit a conduit à souhaiter pouvoir lire un microcircuit dans des dispositifs d'échanges par contact adaptés à recevoir des corps de formats divers ; par ailleurs, il est apparu efficace, du point de vue production, de fabriquer des cartes à microcircuit ayant un format donné, en y prédécoupant des corps de cartes plus petits ; en particulier, il est encore classique de fabriquer des cartes à microcircuit au format 1FF en y prédécoupant un corps de carte de format 2FF. plus récemment, il a en outre été proposé de prédécouper, dans une carte de format 1FF, un corps de carte au format 2FF en y prédécoupant un corps de format 3FF ; ces prédécoupes sont faites en sorte que le microcircuit monté dans la carte de format maximum, en pratique 1FF, respecte les conditions sur les emplacements des surfaces de contact associées au format 2FF lorsqu'on détache le corps de format 2FF vis-à-vis de la carte de départ, voire au format 3FF lorsqu'on détache le corps de format 3FF.

Pour faciliter le détachement du corps souhaité dans une carte produite au format 1FF, il a été proposé dans le document FR - 2 967 515 diverses découpes additionnelles impliquant que le détachement du corps de carte au format 3FF se fasse en détruisant le corps au format 2FF.

Avec l'usage grandissant du format 4FF, il est désormais intéressant de pouvoir fabriquer des cartes dans lesquelles sont prédécoupés un corps (voir DE-10 2012 001 776), voire divers corps (voir EP-2 608 116 et DE-10 2011 107 203) de carte dont un corps au format 4FF, avec un microcircuit respectant les conditions de dimensionnement et d'emplacement prévues par les normes à propos de ce format 4FF.

Toutefois, il y a des applications où il est souhaité de pouvoir utiliser un corps de carte au format 4FF dans un dispositif de communication par contact capable de recevoir une carte au format 4FF ainsi que dans un autre dispositif de communication par contact destiné à recevoir des cartes à un format supérieur ; pour satisfaire un tel besoin, on a proposé des adaptateurs adaptés à recevoir une carte ayant un petit format en ayant un format plus grand par rapport auquel les surfaces de contact de cette carte sont positionnées en sorte de respecter les contraintes des normes relatives aux surfaces de contact d'une carte au format de l'adaptateur.

Mais une difficulté se rencontre avec les cartes de format 4FF dont la largeur (mesurée parallèlement aux alignements de surfaces de contact, selon la convention mentionnée ci-dessus) est de 8,8 mm, tandis que le format 3FF définit une largeur de 12 mm ; si l'on superpose les zones de contact prévues par les normes s'appliquant au format 4FF avec celles prévues par les normes s'appliquant au format 3FF, on constate que le format 3FF déborde d'à peine 330 micromètres le long du bord supérieur de ces formats (mais de 2,87 mm le long du bord inférieur) ; cela signifie que l'adaptateur permettant de convertir une carte au format 4FF au format 3FF est formé d'un cadre (ayant, ou non, un fond) dont le brin supérieur a une largeur d'à peine 330 micromètres, ce qui revient à dire que cet adaptateur présente des risques élevés de rupture de ce brin supérieur lors de son utilisation.

Pour pallier à cet inconvénient, il a été proposé, dans le document FR- 2 982 690 (ou le document WO-2013/072616) -voir aussi le document FR-2 985 061-, un adaptateur au format 3FF adapté à recevoir une carte de plus petit format, par exemple au format 4FF, cette petite carte ayant des surfaces de contact qui sont modifiées en sorte de permettre que l'adaptateur ait un brin supérieur ayant une largeur suffisante pour lui conférer une résistance mécanique compatible avec son usage d'adaptateur.

Cette modification des surfaces de contact consiste en pratique en un décalage des surfaces de contact de la carte au format 4FF vers son bord supérieur. Ce décalage est identique pour toutes les surfaces C1 à C7 et entraîne une réduction de la surface de contact C1 (ou C5) et une augmentation de la surface de contact C3 (ou C7), en réduisant la distance entre le bord supérieur de la zone de contact prévue par les normes et le bord supérieur du corps de carte au format 4FF, ce qui permet alors d'augmenter la largeur du brin supérieur de l'adaptateur au format 3FF.

Une telle modification revient donc à renoncer à des règles habituelles de conception des plaques de contact des cartes à microcircuit. Plus précisément, les surfaces de contact sont disposées en sorte d'englober les zones théoriques de contact prévues par les normes pour garantir qu'un bon contact est établi avec les plots d'un dispositif de communication par contact destiné à recevoir une carte équipée de telles surfaces de contact ; pour optimiser un tel contact, chaque surface de contact est définie avec la plus grande superficie possible pour garantir un bon contact avec les plots d'un tel dispositif de communication malgré les tolérances de fabrication ; cela se traduit par le fait que les contours des surfaces individuelles de contact sont définis les uns par rapport aux autres de manière à n'être séparés que par des espaces limités avec pour résultat que, en apparence, les plages globales de contact occupent pratiquement toute la surface située à l'intérieur du contour de la plage globale de contacts ; l'apparence presque continue de la plage globale de contacts conduit à assimiler en pratique cette plage à une plaque et à la notion de plaque de contact. En d'autres termes, les surfaces individuelles de contact sont en pratique globalement centrées sur les zones théoriques de contact prévues par les normes en débordant autant que possible de celles-ci tout en étant efficacement électriquement isolées les unes par rapport aux autres.

Or, les normes fixent pour les zones théoriques de contact des divers formats de cartes à microcircuit à plages de contact, une répartition régulière, ce qui conduit à choisir pour les surfaces de contact une répartition également régulière, avec en pratique une symétrie par rapport à une ligne médiane s'étendant dans le sens de la longueur du corps de la carte considérée ; dans le cas d'une carte de format 4FF, on cherche ainsi à disposer les surfaces de contact C1 et C3 (respectivement C5 et C7) de manière symétrique par rapport à une ligne médiane du corps passant par le milieu de la surface de contact C2 (respectivement C6). De même, on cherche habituellement à disposer les surfaces C1 à C3 selon une colonne qui est sensiblement symétrique de la colonne formée par les surfaces C5 à C7 (étant précisé que, en pratique, lorsqu'il n'est pas prévu de surface spécifique de type C4 ou C8, il est habituel que la surface de contact C5 se prolonge vers la colonne C1-C3 puis vers le bas de manière à occuper l'espace situé entre ces colonnes ; cela a en pratique un effet de renforcement mécanique du fait de la présence du matériau conducteur formant les surfaces de contact tout en conférant une certaine esthétique à la plage de contacts formée par l'ensemble des surfaces de contact. Par ailleurs, on comprend que la tenue mécanique d'une carte ayant un petit format tel que le format 4FF est d'autant meilleure que le module qu'elle contient est disposé de manière centrée par rapport à son contour, ce qui revient à dire qu'il est souhaitable que la plage de contacts soit centrée par rapport au contour du corps de carte, au moins dans le sens de sa plus petite dimension (c'est-à-dire sa largeur, mesurée verticalement suivant la convention définie ci-dessus).

L'invention a pour objet de satisfaire simultanément aux deux objectifs mentionnés ci-dessus, à savoir permettre de fabriquer une carte comportant un microcircuit entouré d'au moins une prédécoupe au format 4FF et une prédécoupe au format 3FF, tout en permettant que la matière située entre ces prédécoupes constitue un adaptateur permettant, sans rompre de manière intempestive, de convertir la carte au format 4FF au format 3FF tout en conservant autant que possible les règles de conception des surfaces de contact.

On comprend qu'un tel problème se pose dès lors qu'on a une carte dont le format est au moins égal au format 2FF, mais que l'invention a un intérêt tout particulier lorsque le format de la carte est 1FF, dans lequel on sait produire efficacement un très grand nombre de cartes.

L'invention propose à cet effet une carte à microcircuit selon la revendication 1.

On comprend que la condition de symétrie précitée n'empêche pas que l'une ou l'autre des surfaces individuelles se prolonge, le cas échéant, jusqu'à occuper un espace intermédiaire entre lesdites colonnes.

En fait, il a pu être constaté, au contraire de ce que laissait supposer le document FR - 2 982 690, qu'il était possible de former une plage globale de contact respectant les règles habituelles de symétrie tout en englobant à la fois les zones de contact prévues par les normes pour le format 4FF mais aussi celles prévues pour le format 3FF, même lorsque le contour de ce format 3FF est décalé de plusieurs dizaines de micromètres par rapport au bord supérieur du contour du format 4FF. En effet, même en ajoutant les diverses tolérances de fabrication intervenant dans la fabrication d'une carte de format au moins égal au format 2FF et comportant des découpes au format 3FF et au format 4FF autour de la plage de contact, les surfaces de contact sont suffisamment étendues, transversalement à la plus grande dimension de la plage globale de contacts, pour qu'on puisse être certain de continuer à englober les zones théoriques de contact du format 3FF lorsque celui-ci est décalé de manière significative par rapport à sa position recommandée (mais pas imposée) par les normes, par rapport au format 4FF.

Cette carte peut être au format 2FF, ou être à un format supérieur ; toutefois, de manière préférée, cette carte est au format 2FF et est formée au sein d'une carte plus grande, avantageusement au format 1FF. Ainsi, de manière avantageuse, le corps de carte au format 2FF est délimité, par une fente discontinue, au sein d'une carte au format 1FF dont les zones théoriques de contact de la carte au format 4FF sont confondues avec celles de la carte au format 2FF.

Selon l'invention, les surfaces individuelles de contact sont séparées par des interstices centrés sur les interstices entre les zones théoriques de contact de la carte au format 4FF, ce qui contribue à une bonne isolation électrique entre les surfaces de contact, y compris lorsqu'elles sont en contact avec les plots de contact d'un dispositif de communication par contact.

De manière avantageuse, la distance entre le bord supérieur de la prédécoupe au format 3FF et le bord supérieur de la prédécoupe au format 4FF est au moins égale à 490 micromètres. Cette distance est au plus égale à 550 micromètres ou de manière avantageuse 545 micromètres voire à 542 micromètres (valeur testée).

De manière avantageuse, la plage de contact est, comme actuellement, centrée par rapport à la carte au format 4FF, c'est-à-dire que de manière avantageuse la plage de contacts présente un format standardisé délimité par une forme rectangulaire dont les dimensions sont égales à 11*8,32mm. Il est avantageux d'utiliser ce format, appelé M3, car cela permet de ne pas modifier un grand nombre d'outils de fabrication des modules, d'usinage, ou d'encartage réglés pour ledit format M3.

Des objets, caractéristiques et avantages de l'invention ressortent de la description qui suit, donnée à titre illustratif non limitatif, en regard des dessins annexés sur lesquels :

- La figure 1 est une vue de dessus d'une carte au format 2FF, au sein d'une carte plus grande, entourant une découpe au format 3FF entourant une découpe au format 4FF, telle que les zones théoriques de contact se superposent,
- La figure 2 est une vue de dessus d'une carte au format 2FF conforme à l'invention, au sein d'une carte plus grande, entourant une découpe au format 3FF entourant une découpe au format 4FF, conformément à l'invention,
- La figure 3 est une vue de dessus de la carte de la figure 2 au sein d'une carte au format 1FF, et
- La figure 4 est une vue de la carte de la figure 2 montrant les zones théoriques de contact au travers des surfaces de contact.

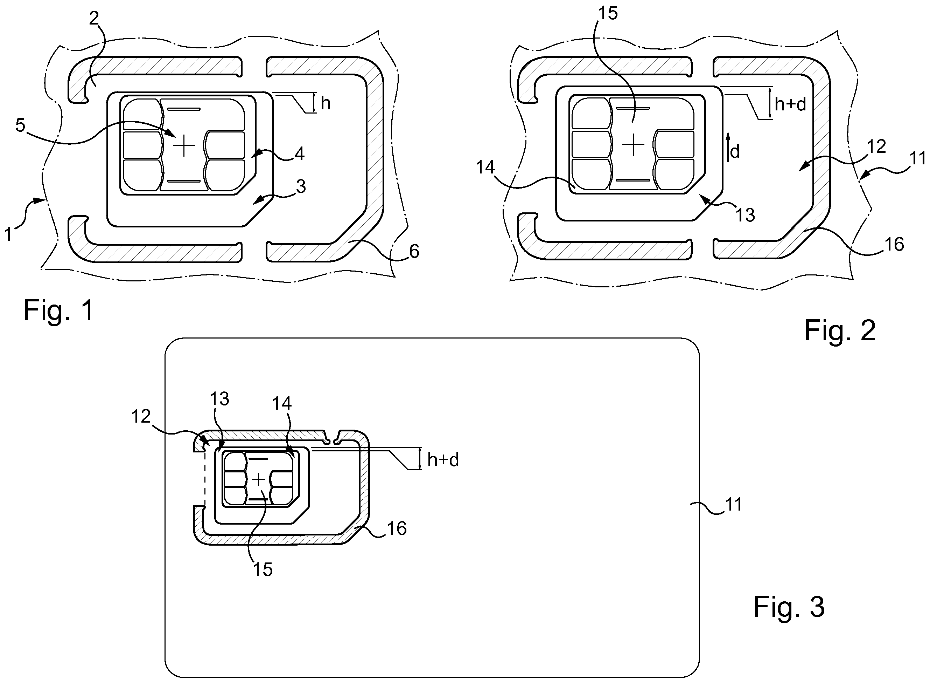

La figure 1 représente une carte 2, ici ménagée au sein d'un corps de carte de plus grand format et entourée par une fente 6, dans laquelle est ménagée une découpe délimitant une carte 3, au sein de laquelle une découpe délimite une carte 4 ; cette carte 4 porte une plage de contacts 5 formée de plusieurs surfaces de contact.

La fente 6 entourant la carte est, de manière connue en soi, interrompue le long du petit côté à gauche (la matière est, le long de ce petit côté, incomplètement tranchée) et en une zone située sur le côté supérieur de la carte 2. Cette fente définit donc une découpe incomplète.

De même, la découpe définissant le contour de la carte 3 peut être complète ou non ; il peut ainsi s'agir d'un tranchage complet effectué avec un outil suffisamment fin pour que la carte 3 reste au sein de la carte 2 par frottement entre sa tranche et la tranche interne de la découpe en question ; en variante il peut rester, en certains endroits, une continuité de matière entre la carte 3 et le cadre qui complète cette carte 3 pour former la carte 2.

Les mêmes commentaires peuvent être faits à propos de la découpe délimitant la carte 4 au sein de la carte 3.

Par convention, les notions de découpe et de prédécoupe désignent toutes deux, ici, une réduction significative de lien mécanique au travers de cette découpe ou prédécoupe propre à rendre facile un détachement ultérieur le long du contour considéré, tout en assurant jusque-là un lien suffisant pour maintenir en place chaque carte à l'intérieur de la carte de plus grand format.

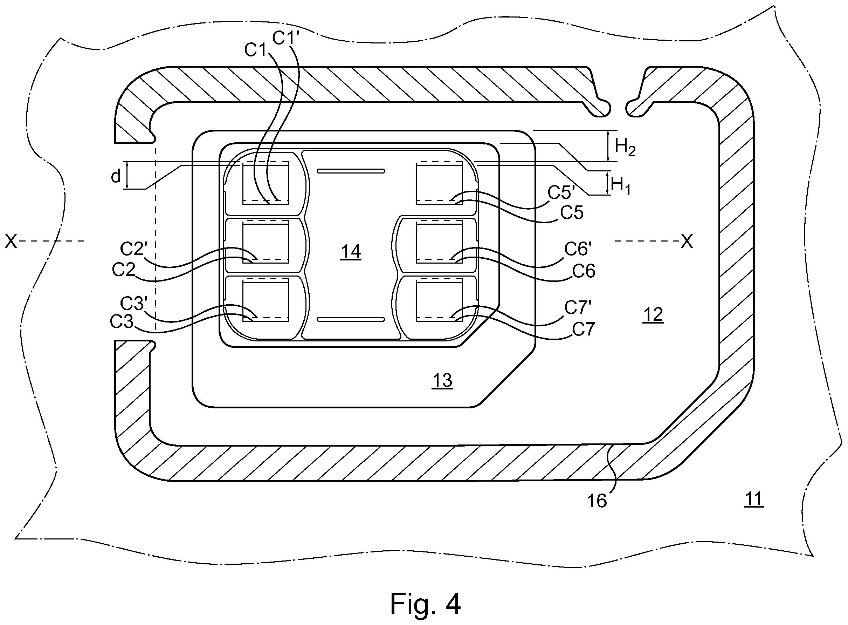

En fait, cette carte 4 est au format 4FF défini par les normes ISO7816-2 et ETSI 102 221 V11.0.0 ; la plage globale de contacts 5 comporte des surfaces individuelles de contact qui sont centrées sur des zones théoriques de contact qui sont définies dans ces normes (cela sera détaillé à propos de la figure 4), en position et en dimension par rapport au bord supérieur de cette carte.

En ce qui concerne la carte 3 elle est au format 3FF tel que défini par les normes précitées, qui définissent de même des zones théoriques de contact en position et en dimension par rapport au bord supérieur de cette carte 3.

Enfin, la carte 2 est au format 2FF tel que défini par les normes précitées, qui définissent des zones théoriques de contact en position et en dimension par rapport au bord supérieur de cette carte2.

Il est à noter que ces normes indiquent le positionnement que peut avoir chacune des cartes pour que les zones théoriques de contact définies pour un format donné soient superposées aux zones théoriques de contact du format supérieur.

On comprend en effet que la plage globale de contacts 5 doit permettre une communication de la carte 2 avec un lecteur de communication par contact associé au format 2FF, mais aussi permettre une communication de la carte 3 (après détachement vis-à-vis du reste de la carte 2) avec un lecteur associé au format 3FF, et permettre une communication de la carte 4 (après détachement vis-à-vis du reste de la carte 3, voire du reste de la carte 2). Pour que les surfaces de contact de cette plage globale de contacts 5 soient correctement centrées sur les zones théoriques de contact de chacun des formats, il est en effet logique que les découpes délimitant les cartes 3 et 4 soient positionnées pour que les zones théoriques de contact de la carte 2 constituent aussi les zones théoriques des cartes définies par ces découpes.

Lorsqu'on compare les contours des cartes 3 et 4 pour qu'elles aient de mêmes zones théoriques de contact telles que définies pour les formats 3FF et 4FF, on constate que le bord supérieur de la carte 3 est situé à une distance de 0.330 mm du bord supérieur de la carte 4.

Cela revient à dire que la carte 3 comporte, en complément de la carte 4, un cadre dont le brin supérieur a une épaisseur de h=330 micromètres. Une telle largeur ne pose a priori pas de problème pour le détachement de la carte 4FF à partir de la carte 3FF (encore positionnée, ou non) au sein de la carte 2) ; par contre, on comprend que, si on souhaite par la suite convertir la carte 4 au format 3FF par engagement dans le cadre précité, le brin supérieur de ce cadre risque fortement de se rompre, de sorte que ce cadre ne peut constituer un adaptateur efficace pour convertir cette carte 4 au format 3FF.

La figure 2 représente une carte 12 qui, comme la carte 2, comporte une plage globale de contact 15, entourée par une découpe délimitant une carte 4, elle-même entourée par une découpe délimitant une carte 13, elle-même entourée par une découpe délimitant une carte 12. Comme précédemment, la carte 14 est au format 4FF, la carte 13 est au format 3FF et la carte 12 est au format 2FF ; la découpe délimitant la carte 12 est une fente 16 identique à la fente 6 de la figure 1, au sein d'un corps de carte 11.

La plage globale de contact 15 est identique à la plage globale de contacts 5 de la figure 1 et ses surfaces individuelles de contact sont identiques à celles de cette plage 5. Tel qu'illustré sur les figures, cette plage est conforme au format standard dont les dimensions sont 11mm * 8,32mm ; de même la découpe délimitant la carte 14 est disposée de la même manière que la découpe délimitant la carte 4 au sein de la carte 4, autour de cette plage globale de contacts 15, et la fente 16 a la même situation par rapport à la plage globale de contacts 15 que la fente 6 par rapport à la plage globale de contacts 5.

Par contre, la découpe délimitant la carte 13 est décalée vers le haut, d'une distance d par rapport à la découpe de la carte 3 autour de la plage globale de contacts 15. Il en découle que la carte 13 comporte, en complément de la carte 14, un cadre dont le brin supérieur a une largeur de (h+d) et est a donc une meilleure tenue mécanique que le brin supérieur que comporte la carte 3 en complément de la carte 4.

La figure 3 représente la totalité du corps de carte 11 au sein de laquelle est situé l'ensemble des cartes 12 à 14 de la figure 2. De manière avantageuse, en complément de cet ensemble des cartes 12 à 14, ce corps de carte 11 forme une carte conforme au format 1FF dont les zones théoriques de contact sont confondues avec les zones théoriques de contact des cartes 12 et 14.

Le décalage vers le haut du contour de la carte 13 par rapport au contour de la carte 3 est choisi en sorte que les zones théoriques de contact définies par les normes par rapport à ce contour de la carte 13 soient entièrement englobées dans les surfaces de contact de la plage globale de contacts 15 que comporte la carte 14.

Il est apparu que, compte tenu du niveau actuel des tolérances associées aux diverses étapes de fabrication d'une telle carte 12 à plusieurs formats, on pouvait élargir de manière significative la largeur du brin supérieur que la carte 13 comporte en complément de la carte 14.

Cela ressort de l'examen de la figure 4 où sont représentées les cartes 12 à 14, ainsi que les zones théoriques de contact des cartes 12 et 14 ; ces contacts sont classiquement désignés par C1 à C3, C5 à C7, étant rappelé que les normes prévoient deux autres zones de contact C4 et C8 qui peuvent au choix être dans le prolongement des colonnes formées par les zones C1 à C3, d'une part, et des zones C5 à C7, d'autre part, ou être situées entre ces colonnes. Ces zones C4 et C8 n'ayant souvent pas d'utilité, elles ne sont pas représentées ici et aucune surface individuelle de contact ne leur est associée ; on comprend toutefois que, dans une application où ces zones C4 et C8 auraient une utilité, il suffirait de modifier la plage C5 de manière à ce qu'elle ne se prolonge pas vers la gauche par rapport aux contacts C6 et C7, et la surface de contact située entre les colonnes pourrait être modifiée en sorte d'être décomposée en deux surfaces individuelles de contact couvrant respectivement les zones théoriques associées aux contacts C4 et C8.

On peut noter que les surfaces individuelles de contact C1 à C3, d'une part, et C5 à C7, d'autre part, définissent au sein de la plage globale de contacts (et donc au sein de la carte) deux colonnes parallèles situées à proximité de deux bords de cette plage globale de contact.

La raison pour laquelle l'une des surfaces de contact, ici celle associée au contact C5, se prolonge jusqu'à occuper l'espace non occupé par les autres surfaces de contact permet que l'ensemble des surfaces de contact occupe la quasi-totalité de la superficie de la plage globale de contacts 5. En variante, notamment pour des raisons de personnalisation, on peut toutefois prévoir de laisser, au sein de cette plage globale, des espaces non couverts par de telles surfaces de contact.

Les zones théoriques de contact précitées sont représentées par des rectangles en trait pleins.

Conformément à la géométrie actuellement choisie pour les plages globales de contact, les surfaces de contact C1 et C5 sont, au sein des colonnes précitées, symétriques des surfaces de contact C3 et C7 par rapport à une ligne médiane de la plage globale de contact 15, schématisée par la ligne X-X, et les surfaces C2 et C6 sont symétriques par rapport à cette ligne ; on comprend que cette ligne médiane est telle que les bords supérieur et inférieur de la plage de contact, habituellement parallèles aux bords des cartes, sont à une même distance de cette ligne médiane ; en pratique cette ligne est au moins approximativement confondue avec une ligne médiane du corps de carte de la carte 14 (en négligeant le coin coupé en bas à droite) ; cela revient à dire que le bord supérieur de la plage globale de contact est à une distance du bord supérieur de la carte 14 qui est égale à la distance entre les bords inférieur de cette plage et de cette carte. La dimension verticale des surfaces C1, C3, C5 et C7 est ici supérieure à la dimension verticale de ces surfaces médianes C2 et C6. Les interstices entre ces surfaces, habituellement identiques entre toute paire de surfaces adjacentes, sont centrés sur les interstices entre les zones théoriques de contact de la carte 14 au format 4FF.

On comprend que le fait que l'une ou l'autre des surfaces individuelles puisse être connecté, ou non, à une zone centrale reste compatible avec la notion de symétrie précitée.

Du fait du décalage d vers le haut du contour de la carte 13 (en référence à la carte 14) par rapport au contour de la carte 3 (en référence à la carte 4. Les zones théoriques de contact définies par les normes pour le format 3FF de cette carte 13 présentent, par rapport aux zones théoriques associées aux cartes 12 et 14, un même décalage d. Ces zones théoriques, notées C1', C2', C3', C5', C6' et C7', sont représentées par des rectangles en tirets, qui ne se distinguent des rectangles en traits pleins qu'en leurs côtés supérieur et inférieur.

A la différence des zones théoriques des cartes 12 et 14 qui sont centrées par rapport aux surfaces de contact matérialisées dans la plage globale de contacts 15, ces zones théoriques C1'-C3' et C5'-C7' sont excentrées par rapport à ces surfaces de contact ; mais elles restent contenues dans le contour de ces surfaces de contact, ce qui garantit que la carte 3FF peut communiquer de manière fiable avec un dispositif de communication par contact associé au format 3FF.

L'amplitude du décalage appliqué au contour de la carte 13, et donc aux zones théoriques associées par rapport à celles des cartes 12 et 14, est inférieure ou égale à un seuil maximum correspondant à une configuration où le bord supérieur de l'une de ces zones théoriques se superpose, aux tolérances de fabrication près, au bord supérieur de la surface de contact qui la recouvre.

Si l'on désigne par e la largeur de l'interstice entre les surfaces de contact, (dont il a été indiqué qu'elle est habituellement identique entre toutes les surfaces de contact parallèlement aux colonnes C1-C3, et C5-C7), et par E la largeur de l'interstice entre les zones théoriques de contact associées au format 3FF, et si on désigne par T la valeur cumulée des tolérances associées aux diverses opérations intervenant dans la fabrication d'une carte telle que celle de la figure 2 (notamment dans le cas d'une grande carte 11 au format 1FF), on peut conclure, si les interstices entre les surfaces de contact sont centrés sur les interstices entre les zones théoriques de contact du format 4FF, que le décalage peut aller jusqu'à une valeur dmax égale à

$$Dmax = (E-e)/2 - T$$

Dans une configuration habituelle, l'interstice entre les surfaces de contact est de 150 micromètres de sorte que, l'interstice entre zones théoriques de contact étant de 840 micromètres, chaque surface de contact déborde de la zone théorique associée de $(E-e)/2 = 345$ micromètres.

Si l'on évalue on évalue à environ 50 micromètres la tolérance concernant la gravure du matériau de contact (en pratique du cuivre), la tolérance de l'usinage de la fente, la tolérance de la découpe du module (c'est-à-dire l'ensemble de la plage de contact et du microcircuit associé) et la tolérance dans l'encartage de ce module dans la carte, ainsi que la tolérance de découpe du contour de la carte 13 (de préférence par poinçonnage), on aboutit à une tolérance globale de 0.183 micromètres, par des méthodes de calcul connues de l'homme du métier pour établir le cumul des tolérances.

En déduisant cette tolérance de l'amplitude du débordement précité, on obtient une valeur dmax de 162 micromètres. On comprend que, en choisissant un décalage à cette valeur maximale, la largeur du brin supérieur du cadre que la carte 13 comporte en complément de la carte 14 est augmentée de 330 micromètres à 492 micromètres, ce qui correspond à une augmentation très substantielle de cette largeur (de près de 50%).

En pratique on peut estimer que la tenue mécanique du brin supérieur, compte tenu des matériaux habituels dont sont faits les corps de carte, devient satisfaisante lorsque la largeur est d'au moins 400 micromètres.

On peut noter que le brin supérieur en cause est délimité par deux opérations de découpe (de préférence par poinçonnage), pour lesquelles la tolérance peut être évaluée à 50 micromètres, d'où une tolérance cumulée de 70 micromètres (en pratique une tolérance cumulée est définie comme étant le produit de la somme des tolérances par la moitié de la racine carrée de 2). Cela revient à dire que cette valeur minimale empiriquement choisie à 400 micromètres correspond effectivement à un élargissement du brin supérieur même en tenant compte des tolérances.

Bien entendu, il est avantageux que le brin supérieur ait une largeur encore supérieure, par exemple au moins égale à 450 micromètres, voire 500 micromètres.

On comprend que la valeur maximale du décalage du contour de la carte 3FF dépend de la largeur qu'on choisit pour l'interstice entre les surfaces de contact ; en effet, plus cette largeur est faible, plus les surfaces de contact débordent par rapport aux zones théoriques de contact.

A titre d'exemple, si on choisit pour ces interstices une largeur d'à peine 50 micromètres, on obtient, avec la même évaluation des tolérances, une valeur maximale de décalage de 212 micromètres, ce qui revient à permettre que le brin supérieur ait une largeur de 542 micromètres. Cette largeur a une valeur maximale de 550 micromètre.

A titre d'exemple, dans une carte telle que celle de la figure 3, le bord supérieur du contour de la carte 13 est situé à 17.73 micromètres du bord supérieur de la carte complète au format 1FF, tandis que la carte 12 et la carte 14 ont des bords supérieurs qui sont respectivement à 16,48 mm et 18,22 mm de ce bord supérieur de la carte complète.

Il mérite d'être noté que, lorsqu'il est indiqué que les surfaces de contact de la plage globale de contact sont symétriques par rapport à une ligne médiane de cette plage, cette symétrie doit être interprétée aux tolérances de fabrication près ; de même, lorsqu'il est indiqué que les interstices entre les surfaces individuelles de contacts ont égaux ou qu'ils sont centrés sur les interstices, cette notion de centrage ou d'égalité doit être interprétée aux tolérances de fabrication près ; en pratique les tolérances cumulées pour ces expressions sont inférieures ou égales à de l'ordre d'une centaine de microns.

**Revendications**

1. Carte à microcircuit comportant une plage globale de contacts (15), la plage globale de contacts comportant au moins des surfaces individuelles de contact C1 à C3, C5 à C7 connectées à ce microcircuit dans un corps de carte (12), le corps de carte ayant un format au moins égal au format 2FF, dans le corps de carte est ménagée une prédécoupe au format 4FF entourant la plage globale de contacts et une prédécoupe au format 3FF entourant la prédécoupe au format 4FF, ces prédécoupes étant telles que les surfaces individuelles de contact C1 à C3, C5 à C7 ont, par rapport à chacune des prédécoupes des positions et des dimensions telles qu'elles englobent les zones théoriques de contact définies par les normes ETSI 102 221 version V11.0.0 et ISO 7816 définissant ces formats 4FF, 3FF et 2FF, les surfaces individuelles de contact C1 à C3, C5 à C7 définissant deux colonnes parallèles situées à proximité de deux bords de cette plage, le bord supérieur de la prédécoupe au format 3FF, défini par le bord longitudinal de la prédécoupe le plus éloigné du coin de cette prédécoupe comportant un biseau formant détrompeur, étant situé à une distance au moins égale à 400 micromètres du bord supérieur de la prédécoupe au format 4FF et à une distance d'au plus 550 micromètres du bord supérieur de la prédécoupe au format 4FF, les surfaces individuelles de contact C1 et C5 étant, au sein de ces colonnes, symétriques des surfaces individuelles de contact C3 et C7 par rapport à une ligne médiane (x-x) de la plage globale de contacts de la carte au format 4FF, la ligne médiane s'étendant parallèlement à la verticale des colonnes formées par cette plage globale de contacts, les surfaces individuelles de contact étant séparées par des interstices centrés sur les interstices entre les zones théoriques de contact de la carte au format 4FF.

2. Carte à microcircuit selon la revendication 1, dont le corps de carte au format 2FF est délimité, par une fente discontinue (16), au sein d'une carte au format 1FF dont les zones théoriques de contact de la carte au format 4FF sont confondues avec celles de la carte au format 2FF.

3. Carte à microcircuit selon l'une quelconque des revendications 1 ou 2, dont la distance entre le bord supérieur de la prédécoupe au format 3FF et le bord supérieur de la prédécoupe au format 4FF est au moins égale à 490 micromètres.

4. Carte à microcircuit selon la revendication 3, dont ladite distance est au plus égale à 542 micromètres.

5. Carte à microcircuit selon l'une quelconque des revendications 1 à 4, dans laquelle la distance entre le bord supérieur de cette plage globale de contacts et le bord supérieur de la prédécoupe au format 4FF est égale à la distance entre le bord inférieur de cette plage globale de contacts et le bord inférieur de la prédécoupe au format 4FF.

6. Carte à microcircuit selon la revendication 5, dans laquelle la plage de contacts présente un format standardisé délimité par une forme rectangulaire dont les dimensions sont égales à 11*8,32 mm.

**Patentansprüche**

1. Mikroschaltungskarte, die einen globalen Bereich von Kontakten (15) aufweist, wobei der globale Bereich von Kontakten mindestens einzelne Kontaktflächen C1 bis C3, C5 bis C7 aufweist, die mit dieser Mikroschaltung in einem Kartenkörper (12) verbunden sind, wobei der Kartenkörper ein Format mindestens gleich dem Format 2FF hat, im Kartenkörper ein Vorausschnitt im Format 4FF, der den globalen Bereich von Kontakten umgibt, und ein Vorausschnitt im Format 3FF eingerichtet sind, der den Vorausschnitt im Format 4FF umgibt, wobei diese Vorausschnitte so sind, dass die einzelnen Kontaktflächen C1 bis C3, C5 bis C7 bezüglich jedes der Vorausschnitte derartige Stellungen und Abmessungen haben, dass sie die theoretischen Kontaktzonen einschließen, die von den diese Formate 4FF, 3FF und 2FF definierenden Normen ETSI 102 221 Version V11.0.0 und ISO 7816 definiert werden, wobei die einzelnen Kontaktflächen C1 bis C3, C5 bis C7 zwei parallele Spalten definieren, die sich in der Nähe von zwei Rändern dieses Bereichs befinden, wobei der obere Rand des Vorausschnitts im Format 3FF, definiert durch den Längsrand des Vorausschnitts, der am weitesten von der Ecke dieses Vorausschnitts entfernt ist, die eine eine Verwechselungssicherung bildende Abschrägung aufweist, sich in einem Abstand mindestens gleich 400 Mikrometer vom oberen Rand des Vorausschnitts im Format 4FF und in einem Abstand von höchstens 550 Mikrometer vom oberen Rand des Vorausschnitts im Format 4FF befindet, wobei die einzelnen Kontaktflächen C1 und C5 innerhalb dieser Spalten symmetrisch zu den einzelnen Kontaktflächen C3 und C7 bezüglich einer Mittellinie (x-x) des globalen Bereichs von Kontakten der Karte im Format 4FF sind, wobei die Mittellinie sich parallel zur Senkrechten der von diesem globalen Bereich von Kontakten gebildeten Spalten erstreckt, wobei die einzelnen Kontaktflächen durch Zwischenräume getrennt sind, die auf die Zwischenräume zwischen den theoretischen Kontaktzonen der Karte im Format 4FF zentriert sind.

2. Mikroschaltungskarte nach Anspruch 1, deren Kartenkörper im Format 2FF durch einen unterbrochenen Schlitz (16) innerhalb einer Karte im Format 1FF begrenzt wird, wobei die theoretischen Kontaktzonen der Karte im Format 4FF mit denjenigen der Karte im Format 2FF zusammenfallen.

3. Mikroschaltungskarte nach einem der Ansprüche 1 oder 2, deren Abstand zwischen dem oberen Rand des Vorausschnitts im Format 3FF und dem oberen Rand des Vorausschnitts im Format 4FF mindestens gleich 490 Mikrometer ist.

4. Mikroschaltungskarte nach Anspruch 3, deren Abstand höchstens gleich 542 Mikrometer ist.

5. Mikroschaltungskarte nach einem der Ansprüche 1 bis 4, wobei der Abstand zwischen dem oberen Rand dieses globalen Bereichs von Kontakten und dem oberen Rand des Vorausschnitts im Format 4FF gleich dem Abstand zwischen dem unteren Rand dieses globalen Bereichs von Kontakten und dem unteren Rand des Vorausschnitts im Format 4FF ist.

**6.** Mikroschaltungskarte nach Anspruch 5, wobei der Bereich von Kontakten ein standardisiertes Format aufweist, das von einer rechtwinkligen Form begrenzt wird, deren Abmessungen gleich 11*8,32 mm sind.

**Claims**

**1.** Microcircuit card comprising a global contact area (15), the global contact area comprising at least individual contact surfaces C1 to C3, C5 to C7 connected to this microcircuit in a card body (12), the card body having a format at least equal to the 2FF format, in the card body there is formed a pre-cut in the 4FF format surrounding the global contact area and a pre-cut in the 3FF format surrounding the pre-cut in the 4FF format, these pre-cuts being such that the individual contact surfaces C1 to C3, C5 to C7 have, relative to each of the pre-cuts, positions and dimensions such that they encompass the theoretical contact zones defined by the standards ETSI 102221 version V11.0.0 and IS07816 defining these 4FF, 3FF and 2FF formats, the individual contact surfaces C1 to C3, C5 to C7 defining two parallel columns situated in proximity to two edges of this area, the top edge of the pre-cut in the 3FF format, defined by the longitudinal edge of the pre-cut furthest away from the corner of this pre-cut comprising a foolproof feature-forming sloping edge, being situated at a distance at least equal to 400 micrometres from the top edge of the pre-cut in the 4FF format and at a distance of at most 550 micrometres from the top edge of the pre-cut in the 4FF format, the individual contact surfaces C1 and C5 being, within these columns, symmetrical to the individual contact surfaces C3 and C7 relative to a median line (x-x) of the global contact area of the card in the 4FF format, the median line extending parallel to the vertical of the columns formed by this global contact area, the individual contact surfaces being separated by interstices centred on the interstices between the theoretical contact zones of the card in the 4FF format.

**2.** Microcircuit card according to Claim 1, of which the card body in the 2FF format is delimited, by a discontinuous slot (16), within a card in the 1FF format, the theoretical contact zones of the card in the 4FF format of which are merged with those of the card in the 2FF format.

**3.** Microcircuit card according to either one of Claims 1 and 2, of which the distance between the top edge of the pre-cut in the 3FF format and the top edge of the pre-cut in the 4FF format is at least equal to 490 micrometres.

**4.** Microcircuit card according to Claim 3, of which said distance is at most equal to 542 micrometres.

**5.** Microcircuit card according to any one of Claims 1 to 4, in which the distance between the top edge of this global contact area and the top edge of the pre-cut in the 4FF format is equal to the distance between the bottom edge of this global contact area and the bottom edge of the pre-cut in the 4FF format.

**6.** Microcircuit card according to Claim 5, in which the contact area has a standardized format delimited by a rectangular form whose dimensions are equal to 11*8.32 mm.

Fig. 1

Fig. 2

Fig. 3

EP 3 072 087 B1

Fig. 4

EP 3 072 087 B1

**EP 3 072 087 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2967515
- DE 102012001776
- EP 2608116 A
- DE 102011107203

- FR 2982690
- WO 2013072616 A
- FR 2985061